# EUROPEAN PATENT APPLICATION

(11) **EP 0 759 350 A1**
(43) Date of publication of application: **26.02.1997**
(21) Application number: 95112692.9
(22) Date of filing: 11.08.1995
(51) Int. Cl.: B29C 43/24

(54) **Improved calender system**

(71) Applicant: NAN YA PLASTICS CORPORATION, Taipei (TW)
(72) Inventor: Huang, H.W.,, Taipei (TW)
(74) Representative: Grünecker, Kinkeldey, Stockmair & Schwanhäusser Anwaltssozietät

(57) **Abstract**

An improved calender system mainly comprises mixing means (1), kneading means (2), a feeder (3), an extruder (4), a mixing rolls (5), a calender (6), take-off roll means (7), embossing means (8), longitudinal drawing means (9), lateral drawing means (10), draw-tempering means (11), chill rolls (12), surface treatment means (13) and winder (14). The present invention is characterized in that the functions of the embossing means, the longitudinal drawing means, and the lateral drawing means are designed as optional in accordance with the predetermined manufacturing processes.

## Description

### FIELD OF INVENTION

The present invention relates to an improved calender system for manufacturing plastic film, more particularly relates to an improved calender system which can flexibly manufacture plastic films of various plastic materials.

### BACKGROUND OF THE INVENTION

Conventional calender systems are designed for manufacturing thermoplastic films of one material. For example, the calender manufacturing system for polyvinyl chloride (PVC) film is mainly consisted of a calender or a T-die extruder and the calender manufacturing system for polypropylene (PP), polyethylene (PE) or polystyrene (PS)film is mainly consisted of a T-die extruder and a dualdirection extending means. These two calender systems are independent of each other such that they fail to meet the flexible manufacturing system requirements.

In conventional calender manufacturing processes, the film products are made by controlling the roller temperature, gap and speed ratio of the calender system and the drawing of the take-up roller. The thickness for the plastic films made by conventional calendering system are about 0.05-0.8 mm. Since this film is drawn only in the longitudinal direction, the differences in strength and thermal contraction between its longitudinal direction and lateral direction are so great that the film has distinct directional property. With respect to the crystallized plastics such as PP and PE, the density thereof cannot be reduced by adding the inorganic additive (CaCO₃). Moreover, when manufactured by the T-die, because of the gap limitation of the T-die outlet, only narrow products can be manufactured and the thickness of the products cannot be compensated by the auxiliary mechanism of the calendering system. Therefore, the thickness of the film must be greater than 0.3mm. Besides, the above conventional manufacturing processes are too long and occupy too large space in the factory so that the cost for manufacturing the plastic films cannot be reduced.

### SUMMARY OF THE INVENTION

It is an object of the present invention to solve the above-described problems by providing an improved calendering system.

It is another object of the present invention to provide an improved calendering system which can manufacture plastic films of various materials.

It is a further object of the present invention to provide an improved calendering system which can manufacture plastic films of which thickness is ranging from 0.03 to 2.0mm.

It is a further object of the present invention to provide an improved calendering system which can flexibly manufacture plastic films in according to the desired product requirement.

According to the present invention, the improved calender system mainly comprises mixing means, kneading means, a feeder, an extruder, a mixing rolls, a calender, take-off roll means, embossing means, longitudinal drawing means, lateral drawing means, draw-tempering means, cooling and chill rolls, surface treatment means and winder. The present invention is characterized in that the embossing means, the longitudinal drawing means, and the lateral drawing means are designed as optional in accordance with the predetermined manufacturing processes to meet flexible manufacturing system (FMS) requirements.

For manufacturing plastic films of 0.03-2.0mm thickness according to the present invention, the film is drawn 1-6 times in the longitudinal direction by the longitudinal drawing means, 1-2 times in the lateral direction by the lateral drawing means and 1-3 times in longitudinal direction by the draw-tempering means. Besides, the present invention can also improve the directional properties and reduce the density of the plastic films down to 0.8.

### BRIEF DESCRIPTION OF THE DRAWINGS

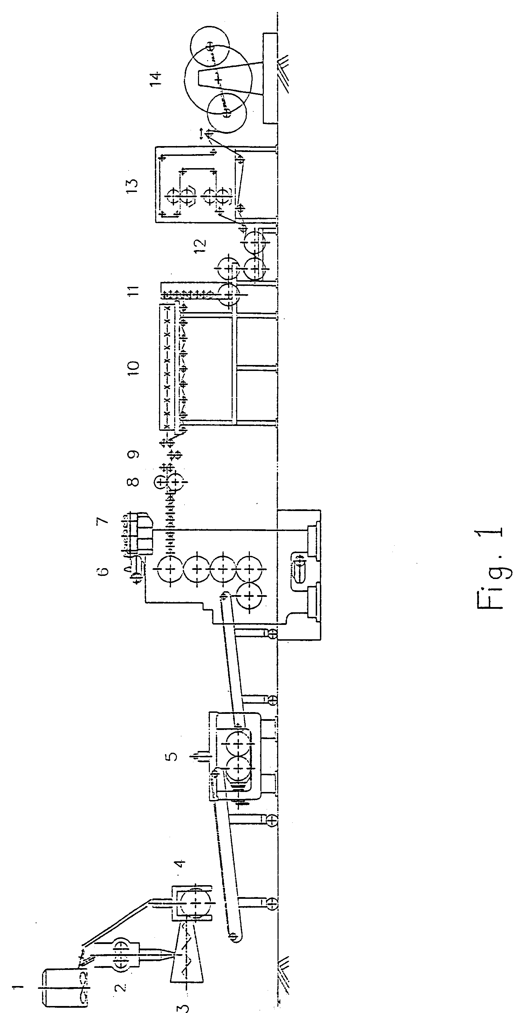

Fig. 1 is a schematic drawing of the improved calendering system according the present invention.

### DETAILED DESCRIPTION OF THE INVENTION

Referring to Fig. 1, the improved calender system mainly comprises mixing means 1, kneading means 2, a feeder 3, an extruder 4, a mixing rolls 5, a calender 6, take-up roll means 7, embossing means 8, longitudinal drawing means 9, lateral drawing means 10, draw-tempering means 11, cooling and chill rolls 12, surface treatment means 13 and a winder 14. The structures and functions of the above devices are described as followings.

Mixing means 1: mixing the raw material with other additive to form a mixed material.

Kneading means 2: kneading the mixed material from the mixing means to form a kneaded material.

Feeder 3: storing the kneaded material and then feeding it to the extruder 4.

Extruder 4: extruding the kneaded material into strip by a single screw or dual screws or planteary screws extruder.

Mixing rolls 5: consisted of two 500-700 mm⌀ hollow rolls which are filled with highly pressured hot water or high pressure steam or hot oil. The surfaces of the rolls is maintained at high temperature between 170°C and 230°C.

Calender 6: calendering the kneaded material to a desired thickness of the products by means of controlling the temperature, the gap and speed ratio of the rollers. The construction of calender rollers can be L-type, reverse L-type, Z-type or reverse Z-type.

Take-off roll means 7: consisted of 4-12 pieces of 80 -200 mm⌀ hollow rolls which are filled with hot water or oil. The drawing ratio in this section is set from 1:1 to 1:6 and the temperature variation of the roll is within ± 1°C.

Embossing means 8: consisted of passive rubber roller and 250-450 mm⌀ active embossing steel roller filled with warm water, cool water or chilled water. The function of the embossing means 8 is designed as optional according to the desired products.

Longitudinal drawing means 9: consisted of three to six pieces of 80-200 mm⌀ rolls and the temperature variation of the roll is within±1°C. The longitudinal drawing means 9 draws the material in longitudinal direction at a drawing ratio from 1 to 6. The function of the longitudinal drawing means 9 is designed as optional according to the desired products.

Lateral drawing means 10:drawing the material from the longitudinal drawing means 9 in lateral direction at a drawing ratio from 1 to 2. The function of the lateral drawing means 10 is designed as optional according to the desired products.

Draw-tempering means 11: tempering the material from the lateral drawing means 10 and can draw the material again in longitudinal direction at a drawing ratio from 1 to 3.

Chill rolls 12: chilling the product from the draw-tempering means 11.

Surface treatment means 13: removing the additives from the surface of the product and/or coating some additives on to improve printability and dry time.

Winder 14: collecting the product.

The present invention is characterized in that the functions of the embossing means 8, the longitudinal drawing means 9, and the lateral drawing means 10 are designed as optional in accordance with the predetermined manufacturing processes. For manufacturing plastic films of 0.03-2.0 mm thickness according to the present invention, the film is drawn 1-6 times in the longitudinal direction by the longitudinal drawing means, 1-2 times in the lateral direction by the lateral drawing means and 1-3 times in longitudinal direction by the draw-tempering means. Besides, the present invention can also improve the directional properties and reduce the density of the plastic films down to 0.80.

According to the present invention, thermoplastic films of various materials can be manufactured in a single system. Therefore, the space in the factory occupied by this system is much smaller than the conventional system.

Preferred embodiments of the present invention have been disclosed. Those skilled in the art, however, would recognize that certain modifications would come within the scope of this invention. For that reason, the scope of this invention should be determined by the appended claims.

## Claims

1. An improved calender system for manufacturing thermoplastic film comprising:
means for mixing the plastic material to form a mixed material:
means for kneading the mixed material from the mixing means to form a kneaded material;
a feeder for storing and feeding the kneaded material to the extruder;
an extruder for extruding the kneaded material into strip material;
mixing rolls for rolling the strip material; a calender for calendering the rolled strip material to a desired thickness;
take-off rolls means for taking off the calendered material;
embossing means for embossing the calendered material;
longitudinal drawing means for drawing the material in longitudinal direction at a drawing ratio from 1 to 6;
lateral drawing means for drawing the material from the longitudinal drawing means in lateral direction at a drawing ratio from 1 to 4;
draw-tempering means for tempering the material from the lateral drawing means and drawing the material again in longitudinal direction at a drawing ratio from 1 to 3;
means for chilling the drawn material;
surface treatment means for removing the additive from the surface of the product;and winder for collecting the finish product.

2. The improved calender system of Claim 1, wherein plastic films can be manufactured by first drawing by longitudinal drawing means, next drawing by lateral drawing means, last drawing by draw-tempering means in according to the product reqired.

3. The improved calender system of Claim 1, wherein the function of the embossing means is designed as optional.

4. The improved calender system of Claim 1, wherein the function of the longitudinal drawing means is designed as optional.

5. The improved calender system of Claim 1, wherein the function of the lateral drawing means is designed as optional.

6. The improved calender system of Claim 1, wherein the manufacturing process of material preparing from mixing means, kneading means, Feeder and Extruder can change to from mixing neans, Feeder and Extruder, in according to the chacteristics of raw material used.

7. The improved calender system of Claim 1, wherein the material ,used are PVC(Polyvinyl Chloride), PS(Polystyrene ), PP (Polypropylene), PE (Polyethylene).
